# EUROPÄISCHE PATENTSCHRIFT

(11) **EP 2 004 361 B1**
(45) Veröffentlichungstag und Bekanntmachung des Hinweises auf die Patenterteilung: **17.10.2012**
(21) Anmeldenummer: 07722124.0
(22) Anmeldetag: 29.03.2007
(51) Int. Cl.: B23P 6/00, F01D 5/00, B23K 101/00

(54) **VERFAHREN ZUR REPARATUR EINES LEITSCHAUFELSEGMENTS**
METHOD FOR REPAIRING A GUIDE VANE SEGMENT
PROCÉDÉ DE RÉPARATION D'UN SEGMENT D'AUBES DIRECTRICES

(30) Priorität: 08.04.2006 DE 102006016703
(43) Veröffentlichungstag der Anmeldung: 24.12.2008
(73) Patentinhaber: MTU Aero Engines GmbH, 80995 München (DE)
(72) Erfinder: LANGE, Anja, 30855 Langenhagen (DE)
(86) Internationale Anmeldenummer: PCT/DE2007/000566
(87) Internationale Veröffentlichungsnummer: WO 2007/115533

(56) Entgegenhaltungen:
- EP-A2- 1 227 218
- US-A- 4 176 433
- US-A- 5 758 416
- US-B1- 6 785 961

## Beschreibung

Die Erfindung betrifft ein Verfahren zur Reparatur eines Leitschaufelsegments einer Gasturbine, wobei das Leitschaufelsegment mindestens zwei Leitschaufeln sowie ein inneres und ein äußeres, jeweils mit den Leitschaufeln verbundenes Deckband umfasst, gemäß dem Oberbegriff des Anspruchs 1.

Gasturbinen umfassen als Hauptelemente in aller Regel einen Verdichter, eine Brennkammer und eine Turbine, wobei die Elemente in dieser Reihenfolge durchströmt werden. Bei zweiwelligen Ausführungen wird im Verdichter und in der Turbine jeweils zwischen einem Hochdruck- und einem Niederdruckbereich unterschieden, wobei eine Welle als Hochdruckwelle, die andere als Niederdruckwelle bezeichnet wird. In der sich unmittelbar an die Brennkammer anschließenden Hochdruckturbine herrschen prozessbedingt sehr hohe Temperaturen, wobei das auch chemisch wirksame, aggressive Arbeitsgas an den Bauteilen zu Beschädigungen, z.B. durch Oxidation, Korrosion und Sulfidation, führen kann. Die metallischen Bauteile sind in diesem Bereich in der Regel mit keramischen Beschichtungen als Schutz versehen, wobei eine lokale Beschädigung bzw. Zerstörung der Schutzschicht sehr schnell zu einer lokalen Schädigung des Bauteils führen wird, z.B. durch Materialüberhitzung und Materialabtrag bis hin zur Perforation. Die hohen thermischen, zyklischen Wechselbelastungen mit Expansion und Kontraktion des Bauteils können ihrerseits zu Rissbildungen bis hin zu Brüchen führen. Die strömungsmechanischen Belastungen fördern diese Schädigungsmechanismen zusätzlich. Bei rotierenden Bauteilen sind außerdem die hohen fliehkraftinduzierten Spannungen zu beachten. Aktive Kühlmaßnahmen, insbesondere für die Leit- und Laufschaufeln, können die Bauteillebensdauer erheblich verlängern. Trotzdem ist speziell im Hochdruckturbinenbereich die Summe der Belastungen bzw. Schädigungsmechanismen so groß, dass Bauteile in gewissen zeitlichen Abständen repariert/instandgesetzt bzw. erneuert/ersetzt werden müssen.

Im vorliegenden Fall geht es konkret um die Reparatur eines Leitschaufelsegments einer Gasturbine, insbesondere eines Hochdruckturbinen-Leitschaufelsegments. Leitschaufeln werden aus mehreren Gründen häufig zu Segmenten/Clustern mit zwei oder mehr Schaufeln pro Einheit zusammengefasst. In Relation zu Einzelschaufeln reduziert sich die Anzahl der Fugen/Spalte, somit sinken auch die Spaltverluste. Den aggressiven Heißgasen bieten sich weniger Angriffsflächen, was der Haltbarkeit insgesamt zu Gute kommt. Die Segmente/Cluster bilden mechanisch stabile Einheiten, wodurch Relativbewegungen und Verschleiß reduziert werden. Allerdings sind Segmente aufwendiger und teurer herzustellen und zu ersetzen. Auch die Zugänglichkeit für Reparaturen ist insbesondere zwischen den Schaufeln erschwert. Bei Leitschaufelsegmenten kommt es öfter vor, dass nach längerem Betrieb nur eine Leitschaufel oder zumindest nicht alle Leitschaufeln irreparabel beschädigt sind, die restlichen Schaufeln jedoch unbeschädigt bzw. reparabel sind. Aus Kostengründen versucht man in solchen Fällen, nur die irreparablen Schaufeln vom Segment zu trennen und durch unbeschädigte, z.B. neue, reparierte oder reparable Schaufeln zu ersetzen.

Ein solches Reparaturverfahren ist durch das Patent gemäß Patentschrift US 6,785,961 B1 geschützt. Dabei wird prinzipiell so vorgegangen, dass zunächst die wenigstens eine, irreparable Leitschaufel vom Segment getrennt wird und danach eine neue Leitschaufel an der Trennstelle mit dem Restsegment verbunden wird. Wie in den Figuren dargestellt, handelt es sich häufig um Segmente mit nur zwei Leitschaufeln, d.h. um eine sogenannte Zwillingsleitschaufel. Bei der Vorgehensweise gemäß dem US-Patent ist es problematisch, das Neuteil - mit Bearbeitungszugaben - relativ zum Restsegment, welches auf Maß gearbeitet ist und durch den Betrieb ggf. Abweichungen von der Neuteilgeometrie aufweist, vor dem Fügen präzise auszurichten, da an dem ggf. nur noch aus einer Leitschaufel mit Deckbandabschnitten bestehenden Restsegment zu wenige verlässliche Bezugspunkte, wie z.B. Flanschbohrungen, vorhanden sind.

Demgegenüber besteht die Aufgabe der Erfindung darin, ein Verfahren zur Reparatur eines Leitschaufelsegments einer Gasturbine anzugeben, welches den Schritt des Trennens wenigstens einer irreparablen Leitschaufel vom Segment und den Schritt des Fügens wenigstens einer unbeschädigten bzw. reparablen Leitschaufel an das Segment umfasst, und nach dessen Durchführung ein instandgesetztes Leitschaufelsegment bereit steht, welches hinsichtlich Maßhaltigkeit, Stabilität und Dauerhaftigkeit mit einem Neuteil vergleichbar ist.

Diese Aufgabe wird durch die in Patentanspruch 1 gekennzeichneten Merkmale gelöst, in Verbindung mit den gattungsbildenden Merkmalen in dessen Oberbegriff. Die Erfindung ist darin zu sehen, dass an das zu reparierende Leitschaufelsegment zuerst mindestens eine Ersatzschaufel gefügt wird, und erst danach - am gegenüberliegenden Segmentende - mindestens eine irreparable Schaufel entfernt wird. Die Schaufelzahl des Leitschaufelsegments ist somit bei allen Verfahrensschritten gleich groß wie oder sogar größer als die Nennschaufelzahl des Segments. Dadurch stehen jederzeit ausreichend viele, eindeutige Bezugspunkte zur Verfügung, um zunächst mindestens eine Ersatzschaufel relativ zum Segment exakt zu positionieren, und abschließend mindestens eine, irreparable Schaufel exakt in der das neue Segmentende bildenden Schnittebene vom Segment zu trennen. Als solche Bezugspunkte bieten sich u.a. Bohrungen in einem radial nach Innen weisenden Befestigungsflansch am inneren Deckband an. Das erfindungsgemäße Verfahren ist nicht dafür vorgesehen, irreparable Schaufeln zwischen intakten bzw. reparablen Schaufeln herauszuschneiden und dann die Lücke zu füllen. Falls nur eine Schaufel irreparabel ist, sollte sich diese deshalb außerhalb der Umfangsmitte des Leitschaufelsegments, d.h. in einer Segmenthälfte befinden. Falls mehrere Schaufeln irreparabel sind, sollten sich diese außerhalb der Umfangsmitte in der selben Segmenthälfte befinden. Grundsätzlich entspricht die Anzahl der an das Segment zu fügenden Schaufeln der Anzahl der vom Segment zu trennenden Schaufeln, da die Nennschaufelzahl beibehalten wird. Diese Anzahl ist in der Weise zu ermitteln, dass beginnend mit der sich am nächsten bei der Umfangsmitte des Segments befindenden, irreparablen Schaufel die Schaufelpositionen (Schaufeln) bis zum umfangsseitigen Ende dieser Segmenthälfte gezählt werden. Eine entsprechende Anzahl an unbeschädigten, insbesondere neuen, und/oder reparablen Ersatzschaufeln wird dann an das Ende der Segmenthälfte gefügt, welche keine irreparable Schaufel aufweist. Nach diesem Verfahrensschritt weist das Leitschaufelsegment vorübergehend eine höhere Schaufelzahl als seine Nennschaufelzahl und damit eine zu große Erstreckung in Umfangsrichtung, d.h. Winkelerstreckung, auf. Dann wird eine dem obigen Zählergebnis entsprechende Anzahl an Schaufeln von dem den gefügten Ersatzschaufeln gegenüber liegenden Segmentende getrennt, wobei die eine oder mehreren, irreparablen Schaufeln entfernt werden. Es kann vorkommen, dass dabei positionsbedingt auch unbeschädigte bzw. reparable Schaufeln mit entfernt werden. Diese können ggf. später als Ersatzschaufeln wieder verwendet werden. Nach dem Trennen besitzt das Leitschaufelsegment wieder seine Nennschaufelzahl und seine Sollabmessungen.

Weitere Ausgestaltungen der Erfindung sind in den Unteransprüchen gekennzeichnet.

Die Erfindung wird anschließend anhand der Zeichnungen noch näher erläutert. Dabei zeigen in vereinfachter, nicht maßstäblicher Darstellung:
Figur 1 eine perspektivische Ansicht eines Leitschaufelsegments mit zwei Leitschaufeln, von denen eine irreparabel beschädigt ist,
Figur 2 eine vergleichbare Ansicht mit einer an das Leitschaufelsegment zu fügenden Ersatzschaufel,
Figur 3 eine vergleichbare Ansicht nach dem Fügen der Ersatzschaufel,
Figur 4 eine vergleichbare Ansicht nach dem Trennen der beschädigten Leitschaufel vom Leitschaufelsegment,
Figur 5 eine axiale Ansicht eines Leitschaufelsegments mit fünf Leitschaufeln, von denen eine irreparabel beschädigt ist, und
Figur 6 eine vergleichbare Ansicht nach dem Fügen zweier Ersatzschaufeln an das Leitschaufelsegment.

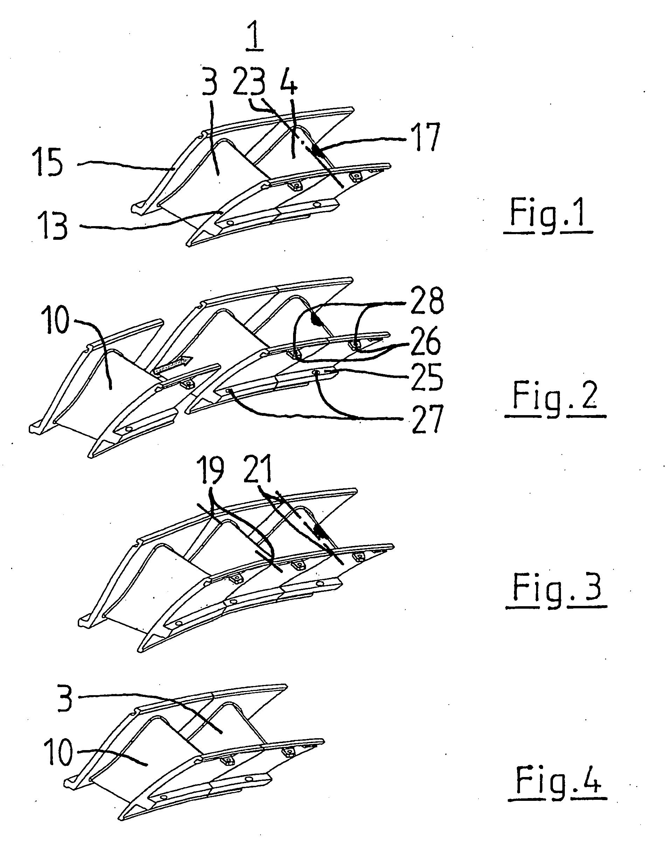

Figur 1 zeigt ein Leitschaufelsegment 1 mit minimaler Schaufelzahl, d.h. mit zwei Leitschaufeln 3 und 4. Eine solche Anordnung wird auch als Zwillingsleitschaufel bezeichnet. Eine der beiden Leitschaufeln, hier die Position 4, weist eine irreparable Beschädigung 17, z.B. in Form eines Durchbruches im Bereich der Eintrittskante, auf. Der Ausdruck "irreparabel" ist nicht absolut zu verstehen, sondern in dem Sinne, dass eine Reparatur mit wirtschaftlich vertretbarem Aufwand nicht mehr möglich und somit nicht sinnvoll ist. Solche Beschädigungen ergeben sich in aller Regel während des Betriebs des Bauteils, sie können aber auch schon fertigungsbedingt vorhanden bzw. "vorprogrammiert" sein, z.B. in Form zu geringer Wandstärke, unzureichender Beschichtung, eines Gefügedefekts usw. Die Leitschaufeln 3, 4 sind über ein radial inneres Deckband 13 und über ein radial äußeres Deckband 15 miteinander verbunden. Dabei ist es möglich, das ganze Leitschaufelsegment 1 z.B. in einem Stück zu gießen oder pulvermetallurgisch zu fertigen. Es können aber auch durch Gießen, Schmieden, spanende Fertigung oder Pulvermetallurgie hergestellte Einzelschaufeln stoffschlüssig zu einem Segment verbunden sein, z.B. durch Löten oder Schweißen.

Die Umfangsmitte 23 des Leitschaufelsegments 1 ist eintrittsseitig mit einer strichpunktierten Linie angedeutet. Bei Leitschaufelsegmenten mit gerader Schaufelzahl wird die Umfangsmitte in der Regel zwischen zwei Leitschaufeln liegen, bei Leitschaufelsegmenten mit ungerader Schaufelzahl wird die Umfangsmitte in der Regel zumindest annähernd der Position der mittleren Leitschaufel entsprechen. Da die Stoßkanten der Deckbänder häufig nicht axial, sondern in Anpassung an den Anstellwinkel der Leitschaufelprofile schräg zur Axialrichtung verlaufen, ist die Umfangsmitte auf der Eintrittsseite des Leitschaufelsegments gegenüber der Umfangsmitte auf der Austrittsseite häufig winkelversetzt. Die Umfangsmitte ist somit keine konkrete, exakte Position, sondern eine fiktive, ungefähre Position zum besseren Verständnis der Erfindung.

Figur 2 zeigt zusätzlich zu dem beschädigten Leitschaufelsegment 1 eine an dieses zu fügeende Ersatzschaufel 10. Da das Leitschaufelsegment 1 zum Zeitpunkt des Fügens noch vollständig ist, weist es eine ausreichende Zahl zuverlässiger Bezugspunkte auf, hier in Gestalt von Bohrungen 27 und 28 an einem Flansch 25 sowie an Laschen 26 am inneren Deckband 13. Mit Hilfe dieser Bezugspunkte lässt sich die Ersatzschaufel 10 vor dem Fügen und während des Fügens ausreichend exakt und fest positionieren.

Figur 3 zeigt den Zustand nach dem Fügen, in welchem das Leitschaufelsegment 1 eine Schaufel zu viel aufweist, da die beschädigte Leitschaufel 4 noch nicht abgetrennt ist. Die Fügestelle 19, zwischen der Ersatzschaufel 10 und der verbleibenden Leitschaufel 3 ist eintrittsseitig an den Deckbändern 13, 15 mit zwei kurzen Linien markiert. Die Trennstelle 21 zwischen der Leitschaufel 3 und der beschädigten Leitschaufel 4 an den Deckbändern 13, 15 ist eintrittsseitig mit einer gestrichelten Linie angedeutet.

Figur 4 schließlich zeigt das instandgesetzte Leitschaufelsegment mit Nennschaufelzahl und Sollgeometrie, wobei - nach Trennen der Leitschaufel 4 - noch die Ersatzschaufel 10 und die Leitschaufel 3 vorhanden sind. Der Zustand jeder der verbleibenden Schaufeln kann unbeschädigt, repariert oder zumindest reparabel sein. Als Reparaturverfahren für Schaufeln und Deckbänder kommen beispielsweise ein Reparaturschweißen, ein Reparaturlöten und/oder ein zumindest lokales Beschichten - ggf. nach vorausgehendem Entschichten - in Betracht.

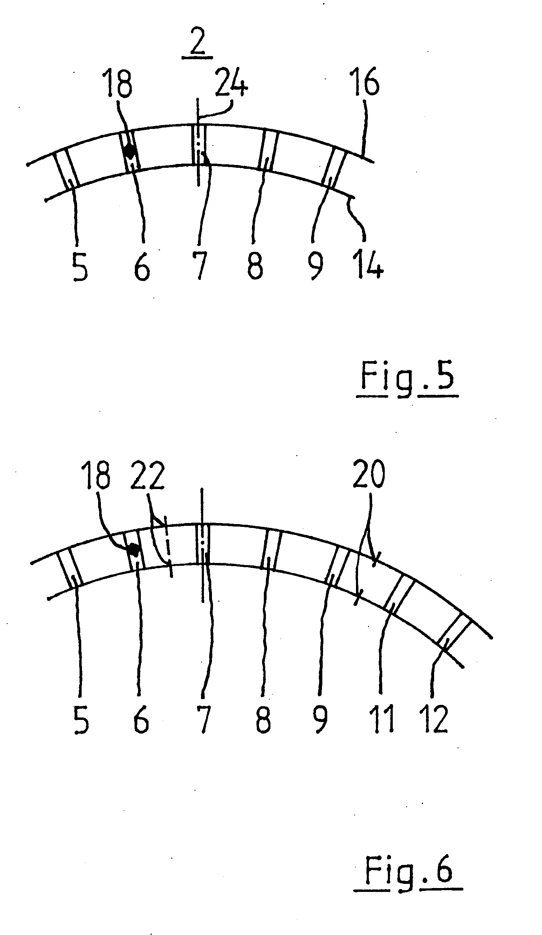

Figur 5 zeigt - stark schematisiert - ein Leitschaufelsegment 2 mit fünf Leitschaufeln 5 bis 9, einem radial inneren Deckband 14 und einem radial äußeren Deckband 16. Die Umfangsmitte 24 ist mit einer vertikalen, strichpunktierten Linie angedeutet und entspricht zumindest etwa der Position der mittleren, dritten Leitschaufel 7. Die vom linken Segmentende-gerechnet zweite Leitschaufel 6 weist eine irreparable Beschädigung 18 auf und ist daher zu ersetzen. Da die Leitschaufel 6 außerhalb der Umfangsmitte 24 in der linken Segmenthälfte liegt, und weder die mittlere Leitschaufel 7 noch eine oder beide Leitschaufeln 8, 9 in der rechten Segmenthälfte irreparabel beschädigt sind, sind die Voraussetzungen für die erfindungsgemäße Reparatur erfüllt. Nun werden die Schaufelpositionen beginnend mit der beschädigten Leitschaufel 6 bis zum linken Segmentende gezählt. Es handelt sich um zwei Positionen, nämlich die der Leitschaufeln 6 und 5. Im Sinne der Erfindung sind somit als Nächstes an das gegenüberliegende, rechte Leitschaufelende zwei Ersatzschaufeln 11, 12 zu fügen, so dass das Leitschaufelsegment 2 vorübergehend 7 Schaufeln aufweist.

Figur 6 zeigt diesen temporären Zustand, wobei die Fügestelle 20 und die Ersatzschaufeln 11, 12 zu erkennen sind. Letztere können - vor dem Fügen - als Einzelschaufeln oder als Zwillingsleitschaufel, d.h. als Leitschaufelsegment, ausgeführt sein. Abschließend werden die Leitschaufeln 5 und 6 an der Trennstelle 22 vom Leitschaufelsegment 2 entfernt. Dabei ist es auch möglich, zunächst die unbeschädigte oder zumindest reparable Leitschaufel 5 und danach die irreparable Leitschaufel 6 abzutrennen. Die Leitschaufel 5 steht dann für die Reparatur weiterer Segmente als Ersatzschaufel zur Verfügung.

Das erfindungsgemäße Verfahren zur Reparatur von Leitschaufelsegmenten erscheint nur dann sinnvoll bzw. wirtschaftlich zu sein, wenn die Zahl der am Segment verbleibenden, unbeschädigten bzw. reparablen Leitschaufeln mindestens so groß ist, wie die Zahl der vom Segment zu trennenden Leitschaufeln, welche wiederum der Zahl der anzufügenden Ersatzschaufeln entspricht. Bei einem Zweiersegment ist maximal eine Schaufel abzutrennen und zu ersetzen, bei einem Dreiersegment ebenfalls maximal eine Schaufel. Bei einem Vierer- und einem Fünfersegment sind maximal zwei Schaufeln abzutrennen und zu ersetzen. Segmente mit Schaufelzahlen über Fünf sind denkbar, aber wohl sehr selten.

## Patentansprüche

1. Verfahren zur Reparatur eines Leitschaufelsegments einer Gasturbine, insbesondere eines Hochdruckturbinen-Leitschaufelsegments, wobei das Leitschaufelsegment mindestens zwei radial oder vorwiegend radial orientierte Leitschaufeln sowie ein radial inneres und ein radial äußeres, jeweils mit den Leitschaufeln verbundenes Deckband umfasst, wobei mindestens eine Leitschaufel irreparabel beschädigt ist und wobei die mindestens eine, irreparable Leitschaufel vom Leitschaufelsegment getrennt wird, und das Leitschaufelsegment durch Fügen mindestens einer unbeschädigten oder zumindest reparablen Ersatzschaufel ergänzt wird, **dadurch gekennzeichnet, dass** zunächst geprüft wird, ob die eine, irreparable Leitschaufel (4, 6) sich außerhalb der Umfangsmittel (23, 24) des Leitschaufelsegments (1, 2) in einer Segmenthälfte befindet, oder ob die mehreren, irreparablen Leitschaufeln sich außerhalb der Umfangsmitte des Leitschaufelsegments in der selben Segmenthälfte befinden, dass bei Erfüllung eines dieser beiden Kriterien die übereinstimmende Anzahl der zu trennenden Leitschaufeln (4, 5, 6) und der zu fügenden Ersatzschaufeln (10, 11, 12) in der Weise bestimmt wird, dass beginnend mit der sich am nächsten bei der Umfangsmittel (23, 24) befindenden, irreparablen Leitschaufel (4, 6). die Schaufelpositionen bis zum umfangsseitigen Ende dieser Segmenthälfte gezählt werden, dass dann an das gegenüberliegende Ende des Leitschaufelsegments (1, 2) eine dem Zählergebnis entsprechende Anzahl an unbeschädigten und/oder reparablen Ersatzschaufeln (10,11,12) gefügt wird, und dass erst danach von dem den Ersatzschaufeln (10, 11, 12) gegenüberliegenden Ende des Leitschaufelsegments (1, 2) eine dem Zählergebnis entsprechende Anzahl an Leitschaufeln (4, 5, 6) getrennt wird, einschließlich der einen, irreparablen Leitschaufel (4, 6) oder der mehreren, irreparablen Leitschaufeln.

2. Verfahren nach Anspruch 1, **dadurch gekennzeichnet, dass** es zur Reparatur von Leitschaufelsegmenten (1, 2) mit geraden und ungeraden Schaufelzahlen bis zu der maximalen Schaufelzahl "Fünf" verwendet wird.

3. Verfahren nach Anspruch 2, **dadurch gekennzeichnet, dass** es zur Reparatur eines Leitschaufelsegments (1) mit zwei Leitschaufeln (3, 4), d.h. einer sogenannten Zwillingsleitschaufel, verwendet wird.

4. Verfahren nach einem der Ansprüche 1 bis 3, **dadurch gekennzeichnet, dass** das Fügen der Ersatzschaufeln (10, 11, 12) und das Trennen der Leitschaufeln (4, 5, 6) jeweils durch Fügen und Trennen des inneren (13, 14) und des äußeren Deckbandes (15, 16) erfolgt.

5. Verfahren nach einem der Ansprüche 1 bis 4, **dadurch gekennzeichnet, dass** das Fügen durch Schweißen und /oder Löten erfolgt.

6. Verfahren nach einem der Ansprüche 1 bis 5, **dadurch gekennzeichnet, dass** zum Fügen und zum Trennen mehrere eindeutige Bezugspunkte, wie zum Beispiel Bohrungen (27) durch einen Flansch (25) im Bereich des inneren Deckbandes (13) an dem zu reparierenden bzw. an dem verbleibenden Leitschaufelsegment (1) genutzt werden.

7. Verfahren nach einem der Ansprüche 1 bis 6, **dadurch gekennzeichnet, dass** am Leitschaufelsegment (1, 2) verbleibende Leitschaufeln (3, 7, 8, 9) und oder an das Leitschaufelsegment (1, 2) zu fügende, reparable Ersatzschaufeln (10, 11, 12) vor dem Fügen und/oder nach dem Fügen und/oder nach dem Trennen mindestens einer Leitschaufel (4, 5, 6) vom Segment (1, 2) instand gesetzt werden.

8. Verfahren nach Anspruch 7, **dadurch gekennzeichnet, dass** das Instandsetzen durch Schweißen und/oder Löten und/oder zumindest lokales Beschichten erfolgt.

9. Verfahren nach einem der Ansprüche 1, 2, 4 bis 8, **dadurch gekennzeichnet, dass** im Falles des Ersatzes von mindestens zwei Leitschaufeln (5, 6) die mindestens zwei Ersatzschaufeln (11, 12) als integrale Einheit, d.h. ebenfalls als Segment, an das zu reparierende Leitschaufelsegment (2) gefügt werden.

10. Verfahren nach einem der Ansprüche 1, 2, 4 bis 9, **dadurch gekennzeichnet, dass** im Falle des Trennens mindestens einer unbeschädigten oder reparablen Leitschaufel (5) vom Leitschaufelsegment (2) diese als Ersatzschaufel weiter verwendet wird.

## Claims

1. Method for repairing a guide-vane segment of a gas turbine, in particular a high-pressure-turbine guide-vane segment, wherein the guide-vane segment comprises at least two guide vanes that are radially or predominantly radially oriented and also a radially inner and a radially outer cover band respectively connected to the guide vanes, where at least one guide vane is damaged irreparably and where the at least one irreparable guide vane is separated from the guide-vane segment, and the guide-vane segment is restored by joining at least one undamaged or at least reparable replacement blade, **characterised in that** it is first examined whether the one irreparable guide vane (4, 6) is located outside the circumferential centre (23, 24) of the guide-vane segment (1, 2) in one segment half, or whether the plurality of irreparable guide vanes are located outside the circumferential centre of the guide-vane segment in the same segment half, **in that** when one of these two criteria is net the agreeing number of guide vanes (4, 5, 6) to be separated and replacement blades (10, 11, 12) to be joined is determined in such a way that starting with the irreparable guide vane (4, 6) located closet to the circumferential centre (23, 24) the blade positions are counted up to the circumference-side end of this segment half, **in that** then a number of undamaged and/or reparable replacement blades (10, 11, 12) corresponding to the result of counting is joined to the opposite end of the guide-vane segment (1, 2), and **in that** only then is a number of guide vanes (4, 5, 6) corresponding to the result of counting, including the one irreparable guide vane (4, 6) or the plurality of irreparable guide vanes, separated from the end of the guide-vane segment (1, 2) lying opposite the replacement blades (10, 11, 12).

2. Method according to claim 1, **characterised in that** it is used to repair guide-vane segments (1, 2) with even and odd blade numbers up to the maximum number of blades of "five".

3. Method according to claim 2, **characterised in that** it is used to repair a guide-vane segment (1) with two guide vanes (3, 4), that is, a so-called twin guide vane.

4. Method according to one of claims 1 to 3, **characterised in that** the joining of the replacement blades (10, 11, 12) and the separation of the guide vanes (4, 5, 6) are effected in each case by joining and separating the inner cover band (13, 14) and the outer cover band (15, 16).

5. Method according to one of claims 1 to 4, **characterised in that** the joining is effected by welding and/or soldering.

6. Method according to one of claims 1 to 5, **characterised in that** for joining and separation use is made of a plurality of distinct reference points, such as, for example, bores (27) through a flange (25) in the region of the inner cover band (13) on the guide-vane segment (1) that is to be repaired or on the guide-vane segment (1) that remains.

7. Method according to one of claims 1 to 6, **characterised in that** guide vanes (3, 7, 8, 9) remaining on the guide-vane segment (1, 2) and/or reparable replacement blades (10, 11, 12) to be joined to the guide-vane segment (1, 2) are overhauled prior to the joining and/or after the joining and/or after the separation of at least one guide vane (4, 5, 6) from the segment (1, 2).

8. Method according to claim 7, **characterised in that** the overhaul is effected by welding and/or soldering and/or at least local coating.

9. Method according to one of claims 1, 2, 4 to 8, **characterised in that** when at least two guide vanes (5, 6) are replaced the at least two replacement blades (11, 12) are joined as an integral unit, that is, likewise as a segment, to the guide-vane segment (2) that is to be repaired.

10. Method according to one of claims 1, 2, 4 to 9, **characterised in that** when at least one undamaged or reparable guide vane (5) is separated from the guide-vane segment (2) this vane is used further as a replacement blade.

## Revendications

1. Procédé de réparation d'un segment d'aubes directrices d'une turbine à gaz, en particulier d'un segment d'aubes directrices d'une turbine haute pression, le segment d'aubes directrices comprenant au moins deux aubes directrices à orientation radiale ou majoritairement radiale ainsi qu'un anneau de renforcement radialement intérieur et un anneau de renforcement radialement extérieur, respectivement raccordés aux aubes directrices, au moins une aube directrice étant irréparablement endommagée et la au moins une aube directrice irréparable étant retranchée du segment d'aubes directrices, et le segment d'aubes directrices étant complété par assemblage d'au moins une aube de rechange non endommagée ou au moins réparable, **caractérisé en ce qu'**il est d'abord examiné si la première aube directrice (4, 6) irréparable se trouve à l'extérieur du milieu de la périphérie (23, 24) du segment d'aubes directrices (1, 2) dans une moitié de segment, ou si les plusieurs aubes directrices irréparables se trouvent à l'extérieur du milieu de la périphérie du segment d'aubes directrices dans la même moitié de segment, **en ce que** le nombre concordant des aubes directrices (4, 5, 6) à retrancher et des aubes ce rechange (10, 11, 12) à assembler est déterminé si un de ces deux critères est satisfait, de telle manière qu'en commençant par l'aube directrice (4, 6) irréparable qui se trouve la plus proche du milieu de la périphérie (23, 24), les positions d'aubes sont comptées jusqu'à à l'extrémité côté périphérie de ladite moitié de segment, **en ce qu'**un nombre d'aubes de rechange (10, 11, 12) non endommagées et/ou réparables correspondant au résultat du comptage est alors assemblé à l'extrémité opposée du segment d'aubes directrices (1, 2), et **en ce qu'**un nombre d'aubes directrices (4, 5, 6) correspondant au résultat du comptage est retranché seulement ensuite de l'extrémité du segment d'aubes directrices (1, 2) opposée aux aubes de rechange (10, 11, 12), y compris la première aube directrice (4, 6) irréparable ou les plusieurs aubes directrices irréparables.

2. Procédé selon la revendication 1, **caractérisé en ce que** celui-ci est appliqué pour la réparation de segments d'aubes directrices (1, 2) avec des nombres pairs et impairs d'aubes, jusqu'au nombre maximum de "cinq" aubes.

3. Procédé selon la revendication 2, **caractérisé en ce que** celui-ci est appliqué pour la réparation d'un segment d'aubes directrices (1) avec deux aubes directrices (3, 4), c'est-à-dire d'une aube directrice dite double.

4. Procédé selon l'une des revendications 1 à 3, **caractérisé en ce que** l'assemblage des aubes de rechange (10, 11, 12) et le retranchement des aubes directrices (4, 5, 6) sont respectivement effectués par assemblage et retranchement de l'anneau de renforcement intérieur (13, 14) et de l'anneau de renforcement extérieur (15, 16).

5. Procédé selon l'une des revendications 1 à 4, **caractérisé en ce que** l'assemblage est réalisé par soudure et/ou par brasage.

6. Procédé selon l'une des revendications 1 à 5, **caractérisé en ce que** plusieurs points de référence univoques sont utilisés pour l'assemblage et pour le retranchement, tels que des alésages (27) au travers d'une bride (25) au niveau de l'anneau de renforcement intérieur (13) sur le segment d'aubes directrices (1) à réparer ou restant.

7. Procédé selon l'une des revendications 1 à 6, **caractérisé en ce que** les aubes directrices (3, 7, 8, 9) restantes sur le segment d'aubes directrices (1, 2) et/ou les aubes de rechange (10, 11, 12) réparables à assembler sur le segment d'aubes directrices (1, 2) sont remises en état avant l'assemblage et/ou après l'assemblage et/ou après le retranchement d'au moins une aube directrice (4, 5, 6) du segment (1, 2).

8. Procédé selon la revendication 7, **caractérisé en ce que** la remise en état est réalisée par soudure et/ou par brasage et/ou au moins par revêtement local.

9. Procédé selon l'une des revendications 1, 2, 4 à 8, **caractérisé en ce qu'**en cas de remplacement d'au moins deux aubes directrices (5, 6), les deux aubes de rechange (11, 12) ou plus sont assemblées comme unité intégrée, c'est-à-dire également comme segment, au segment d'aubes directrices (2) à réparer.

10. Procédé selon l'une des revendications 1, 2, 4 à 9, **caractérisé en ce qu'**en cas de retranchement d'au moins une aube directrice (5) non endommagée ou réparable du segment d'aubes directrices (2), celle-ci sera réutilisée comme aube de rechange.
